# EUROPEAN PATENT APPLICATION

(11) **EP 4 106 312 A1**
(43) Date of publication of application: **21.12.2022**
(21) Application number: 21754173.9
(22) Date of filing: 01.02.2021
(51) Int. Cl.: H04N 5/232, G03B 15/00, G06T 7/00

(54) **SUBJECT PHOTOGRAPHING DEVICE AND METHOD THEREFOR**

(30) Priority: 13.02.2020 JP 2020022507
(71) Applicant: Freebit Co., Ltd., Tokyo 150-0044 (JP)
(72) Inventor: OIZUMI, Hiroshi, Tokyo 150-0044 (JP); ISHIDA, Atsuki, Tokyo 150-0044 (JP)
(74) Representative: HGF
(86) International application number: PCT/JP2021/003440
(87) International publication number: WO 2021/161822

(57) **Abstract**

To provide a subject photographing apparatus with which an inappropriate image photographed by a user cannot be uploaded to an external network; and a subject photographing method using the same. There is provided a subject photographing apparatus, comprising: a photographing device 19 capable of photographing a subject; an image photographing/videographing section 24, which is activated by a user operating a shutter button, for temporarily storing, in a memory, a state of the subject photographed by the photographing device 19; an inappropriate image inference/determination section 25 for retrieving the state of the subject from the memory and determining on an inappropriate image by inferring whether or not the state of the subject is an inappropriate image based on inappropriate image model data; an inappropriate image processing section 26 for not storing the state of the subject in an image storage area of a computer when the determination section determines that the image of the subject is the inappropriate image; and an appropriate image processing section 27 for storing the state of the subject in the image storage area of the computer when the determination section determines that the image of the subject is not an inappropriate image.

## Description

### FIELD OF THE INVENTION

The present invention relates to a subject photographing apparatus such as a camera, a smartphone with a camera, or the like, and a method therefor.

### BACKGROUND OF THE INVENTION

Recently, there have been frequent occurrence of an event in which inappropriate images taken by children with a smartphone or the like were uploaded to social media, causing a social problem.

In particular, in the case of camera devices with network access functionality (mainly smartphones), it is easy to share a photographed image or a videographed video, even ones photographed or videographed with no intention for sharing, and they are sometimes shared to the general public unintentionally through a photograph upload server or the like.

### SUMMARY OF THE INVENTION

### Problem to be solved by the invention

Considering the above situation, the purpose of the present invention is to provide a subject photographing apparatus with which an inappropriate image photographed by a user cannot be uploaded to an external network; and a subject photographing method using the same.

### Means for Solving the Problem

In order to overcome the above challenges, according to a first principal aspect of the present invention, there is provided a subject photographing apparatus invented according to (1)-(6).
(1) A subject photographing apparatus, comprising:
   a photographing device capable of photographing a subject;
   an image photographing/videographing section, which is activated by a user operating a shutter button, for temporarily storing, in a memory, a state of the subject photographed by the photographing device;
   an inappropriate image inference/determination section for retrieving the state of the subject from the memory and determining on an inappropriate image by inferring whether or not the state of the subject is an inappropriate image based on inappropriate image model data;
   an inappropriate image processing section for not storing the state of the subject in an image storage area of a computer when the determination section determines that the image of the subject is an inappropriate image; and
   an appropriate image processing section for storing the state of the subject in the image storage area of the computer when the determination section determines that the image of the subject is not an inappropriate image.
(2) The subject photographing apparatus of the above (1), wherein
   in the case of a video, the image photographing/videographing section stores, in the memory, the state of the subject sequentially from the start of the videographing at a regular time interval,
   wherein in the case of a video, the inappropriate image inference/determination section sequentially retrieves the state of the subject stored in the memory at a regular time interval and performs an inference, and
   wherein in the case of a video, the inappropriate image processing section stops the videographing of the video if it is determined by the inference that the state of the subject is an inappropriate image.
(3) The subject photographing apparatus of the above (1), further comprising
   an inappropriate image model data updating section for connecting to a data source on the Internet and updating the inappropriate image model data to make it up to date.
(4) The subject photographing apparatus of the above (1), further comprising
   an inappropriate image notification section for notifying the determination result to a third party if an inappropriate image is determined by the inference.
(5) The subject photographing apparatus of the above (1), further comprising
   an inappropriate image scanning section for scanning an image or video file stored in the image storage area and performing an inference and a determination by the inappropriate image inference/determination section.
(6) The subject photographing apparatus of the above (5), wherein
   the inappropriate image scanning section deletes the image or video file from the image storage area if the image stored in the image storage area is determined to be inappropriate as a result of the inference.
   Also, according to a second principal aspect of the present invention, there is provided a subject photographing method invented according to (7)-(12).
(7) A method for photographing a subject with a subject photographing apparatus which comprises a photographing device capable of photographing a subject, the method comprising the steps of:
   photographing an image or videographing a video by a user operating a shutter button of the photographing apparatus to cause the photographing apparatus to temporality store, in a memory, a state of the subject photographed by the photographing device;
   inferring or determining an inappropriate image by the photographing apparatus retrieving the state of the subject from the memory and determining on an inappropriate image by inferring whether or not the state of the subject is an inappropriate image based on inappropriate image model data;
   processing an inappropriate image by the photographing apparatus not storing the state of the subject in an image storage area of a computer when the determination section determines that the image of the subject is an inappropriate image; and
   processing an appropriate image by the photographing apparatus storing the state of the subject in the image storage area of the computer when the determination section determines that the image of the subject is not an inappropriate image.
(8) The subject photographing method of the above (7), wherein
   in the case of a video, the image photographing/videographing step stores, in the memory, the state of the subject sequentially from the start of the videographing at a regular time interval,
   wherein in the case of a video, the inappropriate image inference/determination step sequentially retrieves the state of the subject stored in the memory at a regular time interval and performs an inference, and
   wherein in the case of a video, the inappropriate image processing step further comprises the step of stopping the videographing of the video if it is determined by the inference that the state of the subject is an inappropriate image.
(9) The subject photographing method of the above (7), further comprising the step of
   updating inappropriate image model data by the subject photographing apparatus connecting to a data source on the Internet and updating the inappropriate image model data to make it up to date.
(10) The subject photographing method of the above (7), further comprising the step of
   notifying on an inappropriate image by the subject photographing apparatus notifying the determination result to a third party if an inappropriate image is determined by the inference.
(11) The subject photographing method of the above (7), further comprising the step of
   scanning an inappropriate image by the subject photographing apparatus scanning an image or video file stored in the image storage area and performing an inference and a determination by the inappropriate image inference/determination section.
(12) The subject photographing method of the above (11), wherein
   the inappropriate image scanning step deletes the image or video file from the image storage area if the image stored in the image storage area is determined to be inappropriate as a result of the inference.
   Further, according to a third principal aspect of the present invention, there is provided a computer software program invented according to (13)-(18).
(13) A computer software program for photographing a subject with a subject photographing apparatus which comprises a photographing device capable of photographing a subject, the computer software program executing the steps of:
   photographing an image or videographing a video by a user operating a shutter button of the photographing apparatus to cause the photographing apparatus to temporality store, in a memory, a state of the subject photographed by the photographing device;
   inferring or determining an inappropriate image by the photographing apparatus retrieving the state of the subject from the memory and determining on an inappropriate image by inferring whether or not the state of the subject is an inappropriate image based on inappropriate image model data;
   processing an inappropriate image by the photographing apparatus not storing the state of the subject in an image storage area of a computer when the determination section determines that the image of the subject is an inappropriate image; and
   processing an appropriate image by the photographing apparatus storing the state of the subject in the image storage area of the computer when the determination section determines that the image of the subject is not an inappropriate image.
(14) The computer software program of the above (13), wherein
   in the case of a video, the image photographing/videographing step stores, in the memory, the state of the subject sequentially from the start of the videographing at a regular time interval,
   wherein in the case of a video, the inappropriate image inference/determination step sequentially retrieves the state of the subject stored in the memory at a regular time interval and performs an inference, and
   wherein in the case of a video, the inappropriate image processing step further comprises the step of stopping the videographing of the video if it is determined by the inference that the state of the subject is an inappropriate image.
(15) The computer software program of the above (13), further executing the step of
   updating inappropriate image model data by the subject photographing apparatus connecting to a data source on the Internet and updating the inappropriate image model data to make it up to date.
(16) The computer software program of the above (13), further executing the step of
   notifying on an inappropriate image by the subject photographing apparatus notifying the determination result to a third party if an inappropriate image is determined by the inference.
(17) The computer software program of the above (13), further executing the step of
   scanning an inappropriate image by the subject photographing apparatus scanning an image or video file stored in the image storage area and performing an inference and a determination by the inappropriate image inference/determination section.
(18) The computer software program of the above (17), wherein
   the inappropriate image scanning step deletes the image or video file from the image storage area if the image stored in the image storage area is determined to be inappropriate as a result of the inference.

### Effect of the Invention

According to the above-described configuration of the present invention, since the photographing apparatus main body is capable of executing the inference and obtaining the result, it is possible to prevent the storage per se of an inappropriate still image and/or video in the image storage area of the present photographing apparatus without using an API or the like implemented on a network in order to perform the determination on an inappropriate image.

Note that features and marked effects of the present invention other than those described above will be appreciated through the following description of an embodiment of the invention and accompanying drawings.

### BRIEF DESCRIPTION OF THE DRAWINGS

Fig. 1 is an overall structural diagram showing one embodiment of the present invention; and
Fig. 2 is a schematic structural view showing a photographing apparatus according to the embodiment of the present invention.

### DETAILED DESCRIPTION OF THE INVENTION

One embodiment of the present invention will be described below with reference to accompanying drawings.

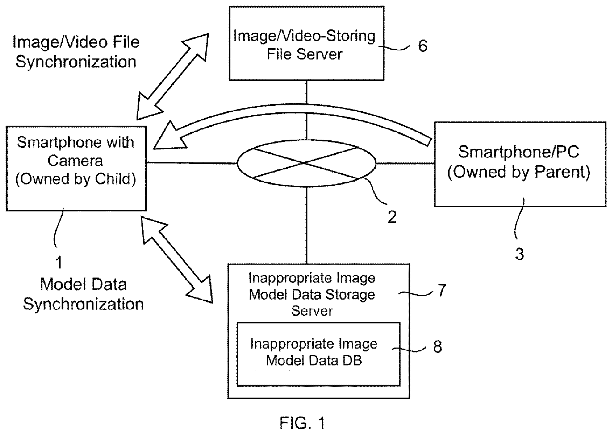

Indicated with the reference number 1 in Fig. 1 is a smartphone with a camera according to one embodiment of a photographing apparatus of the present invention. In this embodiment, the smartphone 1 is owned by a child, and may be monitored and/or controlled from a smartphone or a PC 3 of a parent of the child via the Internet.

Also, this smartphone 1 is adapted such that it may be synchronized with a file server 6 in the cloud through the Internet 2. Thus, it is possible to periodically synchronize an image storage area (camera roll), which is for storing images and/or videos photographed or videographed with this smartphone 1, and the file server 6 to therefore create a backup, in the cloud, of the image and video files stored in the smartphone 1.

Further, as will be described in detail below, the above smartphone 1 is configured to be connectable to an inappropriate image model data storage server 7 via the Internet 2. This inappropriate image model data storage server 7 comprises an inappropriate image model data DB 8 for storing inappropriate image model data built by machine learning.

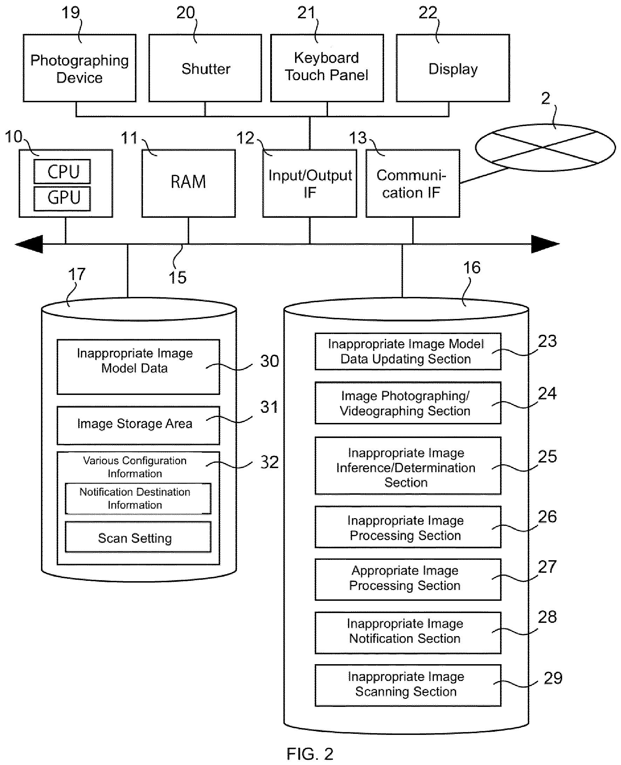

FIG. 2 illustrates a detailed configuration of the smartphone with a camera 1.

This smartphone 1 is actually a portable compact computer, and comprises a bus 15 connected with various arithmetic and logic units 10 including a CPU, a GPU, and the like as well as a RAM 11, an input/output IF 12, and a communication IF 13; and smartphone 1 also comprises a program storage section 16 and a data storage section 17, both connected with the bus 15.

The input/output IF 12 is connected with a photographing device (image sensor) 19, a physical shutter 20, a keyboard/touch sensor 21, and a display 22 of this smartphone. Also, the communication IF 13 is adapted to connect with the Internet 2 via a local network.

The program storage section 16 stores therein-to list only configurations related to the present invention and other than an OS not shown-an inappropriate image model data updating section 23, an image photographing/videographing section 24, an inappropriate image inference/determination section 25, an inappropriate image processing section 26, an appropriate image processing section 27, an inappropriate image notification section 28, and an inappropriate image scanning section 29.

Also, the data storage section 17 stores therein the inappropriate image model data 30 as well as an image storage area 31 and various configuration information 32.

The above-mentioned program storage section 16 and data storage section 17 are specifically storage media such as hard disks, memory cards, SSDs, and the like, wherein each of the functional sections 23-28 stored in the program storage section 16 is adapted to be called by the arithmetic and logic units 10 as needed for deployment and execution on the RAM 11 to therefore function as a respective component of the present invention.

Configuration of each of the functional sections 23-28 will be discussed in detail below in reference with their respective operations.

Firstly, the inappropriate image model data updating section 23 connects with the inappropriate image model data storage server 7 on a regular basis through the communication IF 13 and the Internet 2. The inappropriate image model data storage server 7 is provided with the inappropriate image model data DB 8 for storing inappropriate image model data generated by machine learning, and the inappropriate image model data updating section 23 accesses the inappropriate image model data DB 8 to thereby download updated model data 30 and store it in the data storage section 17. Accordingly, the model data 30 stored in this smartphone 1 is always maintained to an up-to-date condition.

Next, a user of this smartphone 1 activates the image photographing/videographing section 24 on the smartphone 1. This activation may be performed, for example, by clicking a camera icon displayed on the display 22 of the smartphone 1, or may be automatically performed when the smartphone 1 is activated.

Subsequently, if the user points a lens of the photographing device 19 of this smartphone 1 to a subject and operates the shutter 20, the image photographing/videographing section 24 temporality stores a state of the subject of that moment in the RAM 11. This shutter may be the physical shutter 20, or an electronic shutter displayed on the display screen by the image photographing/videographing section 24.

Then, the inappropriate image inference/determination section 25 retrieves the state of the subject temporarily stored in the RAM 11, performs an inference based on the inappropriate image model data 30 stored in the data storage section 17, and determines whether or not the state of the subject belongs to inappropriate images. This decision is made based on, for example, whether of not a response value from the above inference is equal to or greater than a certain value.

Specifically, in the present embodiment, the inappropriate image inference/determination section 25 performs a matching between the state of the subject and the model data 30, and calculates a degree of coincidence (0-1) with a determination threshold of 0.8, for example. The present embodiment uses the CNN (Convolutional Neural Network) as an algorithm for this inference, but other algorithms may be used as well.

When the subject is videographed, the inappropriate image inference/determination section 25 retrieves the state of the subject from the RAM 11 at a regular time interval (usually about 1 second) after the start of the videography, and continually executes the inference/determination.

If the above determination results in "inappropriate," the inappropriate image processing section 26 erases a static image in question from the RAM 11 without saving the image in the image storage area 31. In the case of a video, the inappropriate image processing section 26 stops photographing the video.

On the other hand, if the determination results in "not inappropriate," the appropriate image processing section 27 stores a static image in question in the image storage area 31, and for a video, it allows the videographing to continue and stores the video in the image storage area 31 in a similar manner.

In other words, in either case, the determination on an inappropriate image is performed before the image is stored in the user-accessible image storage area 31 to thereby prevent an inappropriate image or video from being stored in the smartphone 1.

Also, the inappropriate image notification section 28 displays a notification on the display 22 that an inappropriate image has been photographed or videographed. Moreover, the inappropriate image notification section 28 is adapted to reference notification destination information in the various information 32 stored in the data storage section and send a notification externally. In the present embodiment example, a smartphone 3 of the user's parent who supervises the user using the smartphone 1 is configured to send an email notification that an inappropriate image has been photographed or videographed.

Note that the present embodiment may optionally have the inappropriate image scanning section 29 which is configured to regularly check images and/or video data which have been not only photographed/videographed by the user himself/herself, but also obtained through downloading or the like and stored in the image storage area 31; send the checked image to the inappropriate image inference/determination section 25; and determine whether or not the image is inappropriate. If the image is determined to be inappropriate, the scanning section 29 is adapted to be capable of, for example, deleting the image and/or video in question.

Setting as to whether or not to use this scanning section 29 may be specified by registering the specification in the various configuration information 32.

While the invention has been described, it is needless to say that the present invention is not limited to the above-described one examples, and various changes and modifications can be made without departing from the spirit and scope of the invention.

### Description of the Reference Numbers

1. Smartphone with a camera
2. Internet
3. Smartphone
6. File server
7. Inappropriate image model data storage server
8. Inappropriate image model data DB
10. Arithmetic and logic units
11. RAM
12. Input/Output IF
13. Communication IF
15. Bus
16. Program storage section
17. Data storage section
18. Data storage section
19. Photographing device
20. Physical shutter
21. Touch sensor
22. Display
23. Inappropriate image model data updating section
24. Image photographing/videographing section
25. Inappropriate image inference/determination section
26. Inappropriate image processing section
27. Appropriate image processing section
28. Inappropriate image notification section
29. Inappropriate image scanning section
30. Inappropriate image model data
31. Image storage area
32. Various configuration information

## Claims

1. A subject photographing apparatus, comprising:
a photographing device capable of photographing a subject;
an image photographing/videographing section, which is activated by a user operating a shutter button, for temporarily storing, in a memory, a state of the subject photographed by the photographing device;
an inappropriate image inference/determination section for retrieving the state of the subject from the memory and determining on an inappropriate image by inferring whether or not the state of the subject is an inappropriate image based on inappropriate image model data;
an inappropriate image processing section for not storing the state of the subject in an image storage area of a computer when the determination section determines that the image of the subject is an inappropriate image; and
an appropriate image processing section for storing the state of the subject in the image storage area of the computer when the determination section determines that the image of the subject is not an inappropriate image.

2. The subject photographing apparatus of Claim 1, wherein
in the case of a video, the image photographing/videographing section stores, in the memory, the state of the subject sequentially from the start of the videographing at a regular time interval,
wherein in the case of a video, the inappropriate image inference/determination section sequentially retrieves the state of the subject stored in the memory at a regular time interval and performs an inference, and
wherein in the case of a video, the inappropriate image processing section stops the videographing of the video if it is determined by the inference that the state of the subject is an inappropriate image.

3. The subject photographing apparatus of Claim 1, further comprising
an inappropriate image model data updating section for connecting to a data source on the Internet and updating the inappropriate image model data to make it up to date.

4. The subject photographing apparatus of Claim 1, further comprising
an inappropriate image notification section for notifying the determination result to a third party if an inappropriate image is determined by the inference.

5. The subject photographing apparatus of Claim 1, further comprising
an inappropriate image scanning section for scanning an image or video file stored in the image storage area and performing an inference and a determination by the inappropriate image inference/determination section.

6. The subject photographing apparatus of Claim 5, wherein
the inappropriate image scanning section deletes the image or video file from the image storage area if the image stored in the image storage area is determined to be inappropriate as a result of the inference.

7. A method for photographing a subject with a subject photographing apparatus which comprises a photographing device capable of photographing a subject, the method comprising the steps of:
photographing an image or videographing a video by a user operating a shutter button of the photographing apparatus to cause the photographing apparatus to temporality store, in a memory, a state of the subject photographed by the photographing device;
inferring or determining an inappropriate image by the photographing apparatus retrieving the state of the subject from the memory and determining on an inappropriate image by inferring whether or not the state of the subject is an inappropriate image based on inappropriate image model data;
processing an inappropriate image by the photographing apparatus not storing the state of the subject in an image storage area of a computer when the determination section determines that the image of the subject is an inappropriate image; and
processing an appropriate image by the photographing apparatus storing the state of the subject in the image storage area of the computer when the determination section determines that the image of the subject is not an inappropriate image.

8. The subject photographing method of Claim 7, wherein
in the case of a video, the image photographing/videographing step stores, in the memory, the state of the subject sequentially from the start of the videographing at a regular time interval,
wherein in the case of a video, the inappropriate image inference/determination step sequentially retrieves the state of the subject stored in the memory at a regular time interval and performs an inference, and
wherein in the case of a video, the inappropriate image processing step further comprises the step of stopping the videographing of the video if it is determined by the inference that the state of the subject is an inappropriate image.

9. The subject photographing method of Claim 7, further comprising the step of
updating inappropriate image model data by the subject photographing apparatus connecting to a data source on the Internet and updating the inappropriate image model data to make it up to date.

10. The subject photographing method of Claim 7, further comprising the step of
notifying on an inappropriate image by the subject photographing apparatus notifying the determination result to a third party if an inappropriate image is determined by the inference.

11. The subject photographing method of Claim 7, further comprising the step of
scanning an inappropriate image by the subject photographing apparatus scanning an image or video file stored in the image storage area and performing an inference and a determination by the inappropriate image inference/determination section.

12. The subject photographing method of Claim 11, wherein
the inappropriate image scanning step deletes the image or video file from the image storage area if the image stored in the image storage area is determined to be inappropriate as a result of the inference.

13. A computer software program for photographing a subject with a subject photographing apparatus which comprises a photographing device capable of photographing a subject, the computer software program executing the steps of:
photographing an image or videographing a video by a user operating a shutter button of the photographing apparatus to cause the photographing apparatus to temporality store, in a memory, a state of the subject photographed by the photographing device;
inferring or determining an inappropriate image by the photographing apparatus retrieving the state of the subject from the memory and determining on an inappropriate image by inferring whether or not the state of the subject is an inappropriate image based on inappropriate image model data;
processing an inappropriate image by the photographing apparatus not storing the state of the subject in an image storage area of a computer when the determination section determines that the image of the subject is an inappropriate image; and
processing an appropriate image by the photographing apparatus storing the state of the subject in the image storage area of the computer when the determination section determines that the image of the subject is not an inappropriate image.

14. The computer software program of Claim 13, wherein
in the case of a video, the image photographing/videographing step stores, in the memory, the state of the subject sequentially from the start of the videographing at a regular time interval,
wherein in the case of a video, the inappropriate image inference/determination step sequentially retrieves the state of the subject stored in the memory at a regular time interval and performs an inference, and
wherein in the case of a video, the inappropriate image processing step further comprises the step of stopping the videographing of the video if it is determined by the inference that the state of the subject is an inappropriate image.

15. The computer software program of Claim 13, further executing the step of
updating inappropriate image model data by the subject photographing apparatus connecting to a data source on the Internet and updating the inappropriate image model data to make it up to date.

16. The computer software program of Claim 13, further executing the step of
notifying on an inappropriate image by the subject photographing apparatus notifying the determination result to a third party if an inappropriate image is determined by the inference.

17. The computer software program of Claim 13, further executing the step of
scanning an inappropriate image by the subject photographing apparatus scanning an image or video file stored in the image storage area and performing an inference and a determination by the inappropriate image inference/determination section.

18. The computer software program of Claim 17, wherein
the inappropriate image scanning step deletes the image or video file from the image storage area if the image stored in the image storage area is determined to be inappropriate as a result of the inference.
